# EUROPEAN PATENT APPLICATION

(11) **EP 1 602 477 A1**
(43) Date of publication of application: **07.12.2005**
(21) Application number: 04076606.5
(22) Date of filing: 01.06.2004
(51) Int. Cl.: B32B 15/08, B32B 15/14, B32B 15/18

(54) **A heat resistant laminate for expansion joint and a method for manufacturing such laminate**

(71) Applicant: KE-BURGMANN A/S, DK-6600 Vejen (DK)
(72) Inventor: Nielsen, Kurt, 6622 Baekke (DK); Toft, Uffe, 6630 Rodding (DK)
(74) Representative: Elmeros, Claus

(57) **Abstract**

According to the invention, there is provided a more heat-resistant laminate comprising a metal foil, a fabric, and bonding means between the metal foil and the fabric, wherein the bonding means are a flouropolymer foil functioning as an adhesive film for bonding the fabric and the metal foil together.

Hereby, an impermeable laminate is provided which is flexible and can withstand higher temperatures without delaminating. A laminate according to the invention can be mounted directly against hot components with temperatures up to 550°C when the fabric is a woven glass fabric and as high as 1100°C if the fabric is ceramic. The bonding means are stabile in temperatures up to 290°C and provides a stabile and durable bonding also during temperature exposure of the laminate of 310°C for an extended period of time.

## Description

The present invention relates to a laminate in particular for protection against heated, aggressive media in an expansion joint and a method of manufacturing such laminate.

In the field of covers for protection against aggressive medias, such as expansion joints in channel constructions in flue gas plants, the flow channels are exposed to gas heated to temperatures above 260°C. For this purpose, it is known to use several layers of laminated foils or fabrics for designing a gas and fluid-tight connection joint in order to retain the media, such as e.g. flue gas with a high temperature and other aggressive medias inside the channels.

The disadvantage by these known cover types is that the most suitable material available from a temperature perspective and which is relatively fluid-tight and flexible is a flouropolymer foil with an upper temperature limit of 270°C and it is therefore necessary to insulate this foil from the parts of the construction where the temperature is above this temperature.

Typically, the temperature in sections of such channel constructions may reach 270°C to 700°C or more and it is therefore necessary to provide one or more glass fabrics, modified glass fabrics or the like in a sandwich construction in several layers underneath the fluid-tightening layer until a maximum temperature limit below 270°C is achieved. However, these layers of woven fabrics are permeable and do not prevent the leakage of unwanted medias escaping from the flow channels and into the surroundings.

It is known to use a laminate material for the gas-tight layer, which is a thin steel foil with a silicone adhesive intermediate layer so that a glass fabric is fixed to the steel foil. Although this laminate material is impermeable, the maximum temperature exposure that the laminate can withstand is 250°C. By a higher temperature exposure a very rapid deterioration of the laminate will occur causing a destruction of the laminate.

On this background, it is an object by the present invention to provide a laminate which is impermeable and that can withstand higher temperatures.

According to the invention, this object is achieved by a more heat-resistant laminate comprising a metal foil, a fabric, and bonding means between the metal foil and the fabric, wherein the bonding means are a flouropolymer foil functioning as an adhesive film for bonding the fabric and the metal foil together.

Hereby, an impermeable laminate is provided which is flexible and can withstand higher temperatures without delaminating.

A laminate according to the invention can be mounted directly against hot components with temperatures up to 550°C when the fabric is a woven glass fabric and as high as 1100°C if the fabric is ceramic and remain although as single layer.

The bonding means are stabile in temperatures up to 290°C and provides a stabile and durable bonding also during temperature exposure of the laminate of 310°C for an extended period of time. To obtain this stability, a surface treatment may be necessary, eg. in form of acid-washing.

By the invention, it is realised that the laminate is suitable for use in different applications where the temperature exceeds 300°C where the bonding means only function as positioning and holding the metal foil in place until the laminate is mounted and taken into operation. By then, the metal foil will serve as an impermeable barrier irrespective of whether the glass fabric is detached from the metal foil or not.

The metal foil is preferably a stainless steel foil. However, it is realised that other types of thin metal foil may be used, such as aluminium, brass, copper or metal alloys. The metal foil is between 0.01 to 1 mm in thickness, preferably 0.0254 mm (0.01 inch) in thickness.

The woven fabric preferably has a grammar weight between 50 to 3000 g/m². The fabric may be a woven glass fabric, preferably having a grammar weight of approx. 700 g/m². Alternatively, the fabric may be a silicate fabric or a ceramic fabric, preferably having a grammar weight between 600 to 700 g/m².

The flouropolymer foil is preferably between 0.01 to 1 mm in thickness. The material of the flouropolymer foil could be PFA (perfluoro alkoxy). Other suitable materials for the flouropolymer foil are MFA (perflourmethylvinylether), FEP (Fluorinated ethylene propylene), TFE (tetra flour ethylene), ETFE (ethylene tetra flour ethylene), ECTFE (ethylene chloride triflour ethylene) TFM (modified poly tetra flour ethylene) or virgin PTFE (poly tetra flour ethylene).

In the preferred embodiment, the metal foil is provided with an enchased texture whereby the foil is provided with an array of miniature embossing on at least a part of the foil. Hereby, the durability of the laminate is significantly improved. It is also possible to use pre-embossed foils, which will also enlarge the durability of the product.

When the laminate is used in an expansion joint, the laminate is frequently flexed, and after only a few bends, notches or indents will appear in the foil. At these indents the foil is stressed as the foil will continue to bend at these indents and the foil will eventually crack due to metal fatigue due to the stress. However, by providing the foil with an enchased foil texture, the foil is provided with an array of small soft dimples, stress concentrations are avoided and the bending during use will take place at different places in the foil and not at the same spot every time. This reduces the wear of the metal foil and thus improves the durability of the laminate.

In another aspect, the invention concerns a method of manufacturing a laminate including the steps of providing a first layer of metal foil; providing a second layer of thermoplastic flouropolymer; providing a third layer of fabric; assembling the first, second and third layers, pressing the assembly of layers while heating the assembly in a heating zone to a temperature above the melting point of the intermediate second layer for a predetermined amount of time for laminating the first and third webs together; and cooling the laminate while pressing the laminate in a cooling zone.

In the following, the invention is described in detail with reference to the accompanying drawings, in which:
- Fig. 1: is a schematic cross section view of the laminate according to the invention before lamination;
- Fig. 2: is the same after lamination;
- Fig. 3: is a schematic view of a first embodiment of the lamination manufacturing process; and
- Fig. 4: is a second embodiment of the lamination manufacturing process.

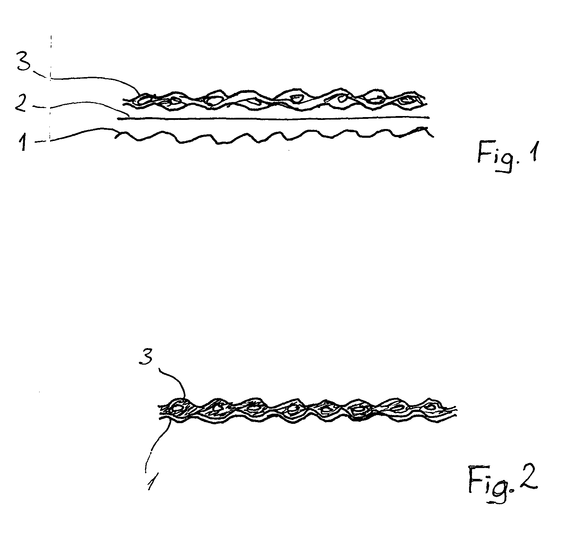

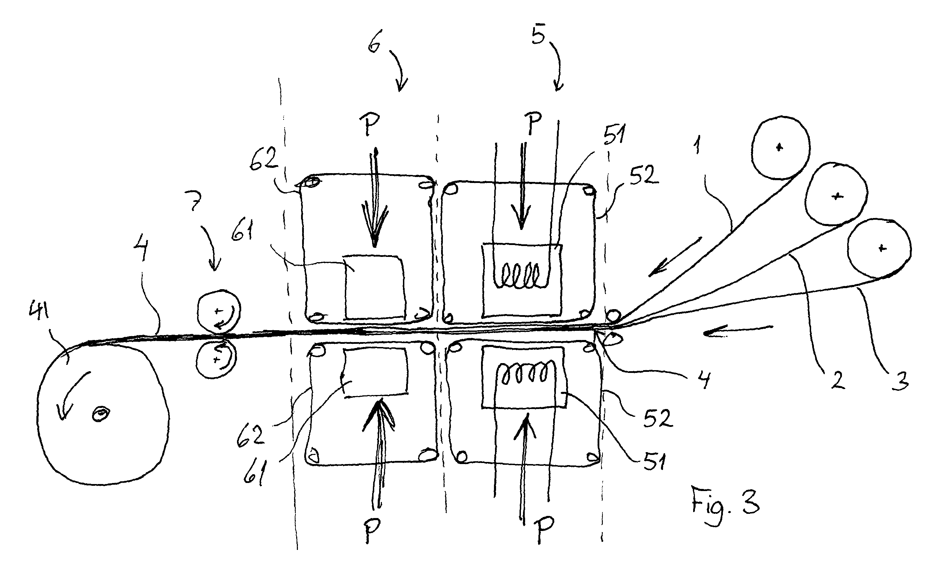

In figure 1 and 2 the laminate according to the invention is shown before and after lamination. A thin metal foil, which is embossed during the process or pre-embossed, preferably a steel foil 1 is provided with a thin flouropolymer foil, preferably a PFA foil 2 and a glass fabric 3. The PFA foil 2 acts as bonding means between the steel foil 1 and the glass fabric 3. The three layers 1, 2, 3 are pressed against each other and simultaneously heated to an elevated temperature. Hereby, the PFA foil 2 melts and becomes liquidized and binds the metal foil 1 and the fabric 3 together. The laminate is subsequently cooled in a cooling zone. During the cooling, the layers in the laminate are kept pressed against each other.

The steel foil 1 and the PFA foil 2 are preferably 0.0254 mm (1 mil) in thickness. The thin steel foil 1, embossed during the process or pre-embossed, is provided with an enchased texture to ensure a both flexible and durable foil ― and laminate respectively. Preferably, the enchased texture is provided the foil when it is pressed against the woven glass fabric (with the PFA foil in between). Hereby, the undulations on the foil match the surface contour of the fabric. This results in a strong bonding as well as a flexible laminate.

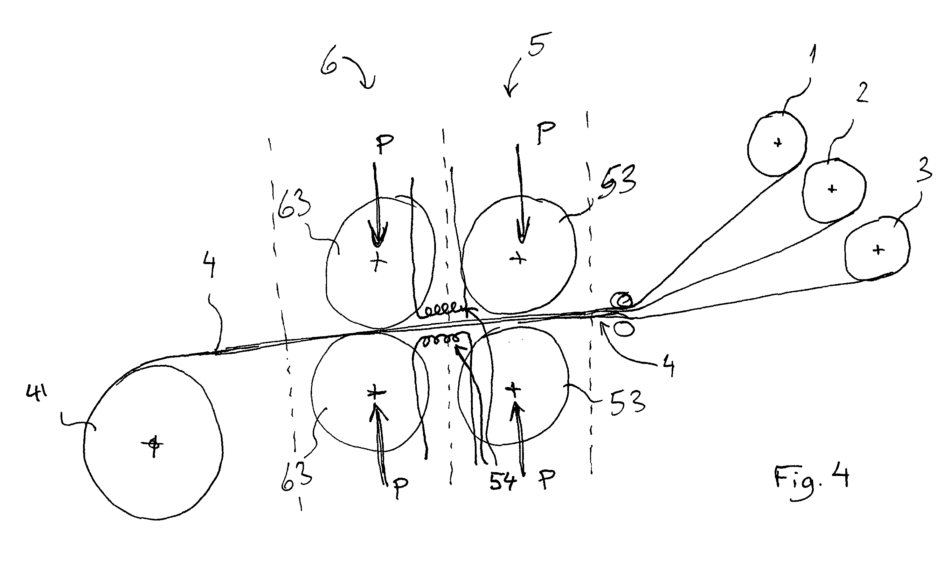

In figures 3 and 4, two embodiments of the manufacturing process are schematically shown.

Adjacent a pressing apparatus, a three supply rolls are provided. From these supply rolls a web of steel foil 1, embossed during the process or pre-embossed, a thermoplastic PFA foil 2 and a glass fabric 3 are provided. The three layers are forwarded into a pressing section and assembled. The pressing section includes a heating zone 5 and a cooling zone 6. The heating zone 5 includes in a first embodiment, shown in fig. 3, a set of pressing members 51, e.g. pressing members or jaws, and a support web 52 on each side of the assembled laminate web 4. The cooling zone 6 also includes a set of pressing members 61 with associated support webs 62 arranged on each side of the assembled material web 4.

The support webs 52, 62 protect the material webs 1, 3 from both sides in the heating and cooling zones 5, 6. The geometric surface texture of the support webs 52, 62 are advantageously adapted so that the steel foil 1 is provided with an array of soft dimples so that the foil 1 during the pressing action is provided with an enchased texture, which ensures a longer durability by frequent bending/flexing of the laminate.

The assembled laminate web 4 is forwarded through the two pressing members 51 in the heating zone and is held there under pressure for a period of 10 to 300 seconds, which makes the thermoplastic flouropolymer foil 2 liquidized due to the simultaneous heating to a temperature of 327 to 400°C. Then the assembled laminate web 4 is pulled forward by the advancing means 7 and the heated material web 4 is retained under pressure between cooling members 61 and is cooled normally to ambient temperature, but depending on the actual requirements to the resulting laminate, a cooling to a temperature between 0°C to 250°C is performed, where an ambient temperature (such as 20 to 30°C) is preferred The laminate web 4 may be intermittently forwarded through the pressing section, i.e. the heating and cooling zones 5, 6. The laminate is finally wound up on a roll 41.

As shown in fig. 4, the pressing members in the heating and cooling zones 5, 6 may alternatively include rollers 53, 63. In this embodiment, the laminate web 4 may be continuously forwarded through a set of heated pressure rolls 53 and subsequently a set of cooling pressure rolls 63. In order to ensure that the flouropolymer remains melted between the two sets of pressure rollers 53, 63, heating means 54 are provided there between, so that the required bonding strength between the steel foil 1 and the fabric 3 is achieved.

The steel foil 1 is an ultra thin metal foil with a thickness between 0.01 to more than 1 mm, preferably 0.0254 mm (1 mil) and embossed during the pressing process or pre-embossed. The flouropolymer foil may be between 0.01 mm and 1 mm in thickness and would preferably be of a PFA (perfluoroalkoxy) material. Other suitable materials for the flouropolymer foil are MFA (perflourmethylvinylether), FEP (Fluorinated ethylene propylene), TFE (tetra flour ethylene), ETFE (ethylene tetra flour ethylene), ECTFE (ethylene chloride triflour ethylene) TFM (modified poly tetra flour ethylene) or virgin PTFE (poly tetra flour ethylene).

The woven fabric preferably has a grammar weight between 50 to 3000 g/m². The fabric may be a woven glass fabric, preferably having a grammar weight of approx. 600 to 700 g/m². Alternatively, the fabric may be a silicate fabric or a ceramic fabric, preferably having a grammar weight of 600 g/m².

Other types of ultra thin metal foils embossed during the process or pre embossed, could be aluminium, brass, copper or other metal alloys. However, when using PFA as bonding means one must observe that the melting point of the metal is above 400°C and the maximum allowed temperature of the laminate may be limited by the type of metal used in the laminate.

If other metals are chosen having a melting point, which is lower, a FEP foil could be used as bonding means between the fabric and the metal foil. Herby, a lower working temperature of about 210°C is achieved.

By the term enchased texture of the metal foil, is meant any kind of repetitive deformation structure of the otherwise plane surface structure of the foil.

According to the invention, the metal foil is enchased during the pressing in the lamination process. Hereby, an extra process step is avoided and as a consequence a reduction of production costs may be achieved.

According to the preferred manufacturing process, the metal foil is provided with an enchased surface during the pressing in the heating and cooling zones, where the pressure is between 5 kg/cm² and 1000 kg/cm² depending on the metal foil which is used in the laminate.

By the invention, it is realised that the undulations or dimples in the enchased texture must be soft rounded shapes, since sharp edges will be stress built-up points in the foil and result in a reduction of the durability of the foil/laminate. A metal fatigue is quickly achieved if sharp edges occur because the bending points or bending lines will re-occur at the same line/point every time. By the soft undulations the bending will occur over a larger area and it is found that the durability may be improved by 20-40%.

## Claims

1. A heat-resistant laminate comprising
a metal foil
a fabric, and
bonding means between the metal foil and the fabric,
**characterised in that**
the bonding means are a flouropolymer foil for bonding the fabric and the metal foil together.

2. A laminate according to claim 1, wherein the metal foil is a stainless steel foil.

3. A laminate according to claim 1 or 2, wherein the metal foil is between 0.01 to 1 mm in thickness, preferably 0.0254 mm (0.01 inch) in thickness.

4. A laminate according to any of claims 1 to 3, wherein the metal foil is provided with an embossed texture whereby the foil is provided with an array of miniature embossing on at least a part of the foil.

5. A laminate according to any of claims 1 to 4, wherein the metal foil is provided with an embossed texture as the foil is provided with an array of miniature embossing on at least a part of the foil during process and also pre-embossed.

6. A laminate according to any of claims 1 to 5, wherein the woven fabric has a grammar weight between 50 to 3000 g/m².

7. A laminate according to claim 6, wherein the fabric is a woven glass fabric, preferably having a grammar weight of approx. 700 g/m².

8. A laminate according to any of claims 1 to 5, wherein the fabric is a silicate fabric or a ceramic fabric, preferably having a grammar weight of 600 g/m².

9. A laminate according to any of the preceding claims, wherein the material of the flouropolymer foil is PFA (perfluoro alkoxy).

10. A laminate according to any of claims 1 to 8, wherein the material of the flouropolymer foil is MFA (perflourmethylvinylether), FEP (Fluorinated ethylene propylene), TFE (tetra flour ethylene), ETFE (ethylene tetra flour ethylene), ECTFE (ethylene chloride triflour ethylene) TFM (modified poly tetra flour ethylene) or virgin PTFE (poly tetra flour ethylene).

11. A laminate according to any of the preceding claims, wherein the flouropolymer foil is within the range of 0.01 to 1 mm in thickness.

12. A method of manufacturing a laminate including the steps of
- providing a first layer of metal foil;
- providing a second layer of thermoplastic flouropolymer;
- providing a third layer of fabric;
- assembling the first, second and third layers,
- pressing the assembly of layers while heating the assembly in a heating zone to a temperature above the melting point of the intermediate second web for a predetermined amount of time for laminating the first and third webs together; and
- cooling the laminate while pressing the laminate in a cooling zone.

13. A method according to claim 12, whereby the pressing is performed by pressing members pressed against each other from each side of the assembly of layers for a predetermined time period, and said members are heated to a temperature of at least 380°C, preferably within the range of 327°C and 400°C.

14. A method according to claim 12 or 13, whereby a supporting fabric is provided on each side of the assembled web to protect the layers in the heating zone.

15. A method according to any of claims 12 to 14, whereby the pressing time is between 10 and 300 seconds, and the pressure is within the range of 10N/cm² and 1000N/ cm² depending on metal foil used.

16. A method according to any of claims 12 to 15, whereby the cooling is performed by cooling members that are pressed against the laminate and providing with cooling means for cooling the laminate to a temperature between 0°C to 250°C, preferably approx. 20-30°C.

17. A method according to any of claims 12 to 16, whereby a supporting fabric is provided on each side of the assembled layer to protect the webs in the cooling zone.

18. A method according to any of claims 12 to 17, whereby the metal foil of the first layer is provided with an enchased texture during the pressing, preferably at least in the heating zone.

19. A method according to claim 18, whereby the supporting fabric is provided with preformed arrays of embossing for providing the metal foil with an enchased texture during the pressing action.

20. A method according to any of claims 12 to 18, whereby the metal foil is provided with an enchased texture corresponding to the surface texture of the woven fabric of the third layer during the pressing.

21. A method according to claim 20, whereby the metal foil is pre-embossed and is also provided with an encased texture corresponding to the surface texture of the woven fabric of the third layer during the pressing.
